# EUROPÄISCHE PATENTSCHRIFT

(11) **EP 2 875 310 B1**
(45) Veröffentlichungstag und Bekanntmachung des Hinweises auf die Patenterteilung: **14.11.2018**
(21) Anmeldenummer: 13739649.5
(22) Anmeldetag: 16.07.2013
(51) Int. Cl.: G01B 11/12, G01B 9/02, G01B 11/24, G01N 21/88

(54) **OPTISCHE MESSSONDE UND VERFAHREN ZUR OPTISCHEN MESSUNG VON INNEN- UND AUßENDURCHMESSERN**
OPTICAL MEASURING PROBE AND METHOD FOR OPTICALLY MEASURING INNER AND OUTER DIAMETERS
SONDE DE MESURE OPTIQUE ET PROCÉDÉ DESTINÉ À LA MESURE OPTIQUE DE DIAMÈTRES INTÉRIEURS ET EXTÉRIEURS

(30) Priorität: 20.07.2012 DE 102012212785
(43) Veröffentlichungstag der Anmeldung: 27.05.2015
(73) Patentinhaber: Taylor Hobson Ltd., Leicester LE4 9JQ (GB)
(72) Erfinder: DRABAREK, Pawel, 75233 Tiefenbronn (DE); FRANZ, Gerald, 71522 Backnang (DE); RIEGGER, Peter, 70825 Korntal-Muenchingen (DE)
(74) Vertreter: Weilnau, Carsten
(86) Internationale Anmeldenummer: PCT/EP2013/064967
(87) Internationale Veröffentlichungsnummer: WO 2014/012915

(56) Entgegenhaltungen:
- WO-A1-02/40936
- WO-A1-2006/032561
- DE-A1-102007 045 568
- DE-C1- 19 721 843
- US-A1- 2009 237 677

## Beschreibung

### Stand der Technik

Die Erfindung betrifft ein Verfahren zur optischen Messung von Innen- und/oder Außendurchmessern von Objekten mit einer Messmaschine und mit einer optischen Messsonde, wobei ein optischer Strahl von der optischen Messsonde auf eine Oberfläche des Objektes fokussiert wird.

Die Erfindung betrifft weiterhin eine Vorrichtung mit einer Messmaschine und einer optischen Messsonde zur Messung von Innen- und/oder Außendurchmessern von Objekten, mit einem ersten optischen Element zum Fokussieren oder Kollimieren eines optischen Strahls auf eine Oberfläche des Objektes.

Für die optische Erfassung der Form, des Durchmessers und der Rauhigkeit von Oberflächen sind interferometrisch arbeitende optische Messsystems mit einem Modulationsinterferometer und einem diesem nachgeordneten Referenzinterferometer bekannt. Diese werden zur optischen Abstandsmessung, beispielsweise in der Qualitätssicherung bei der Messung von Oberflächengeometrien, benutzt. Die EP 1 058 812 B1 beschreibt eine solche interferometrische Messeinrichtung zum Erfassen der Form oder des Abstandes insbesondere rauer Oberflächen mit mindestens einer räumlich kohärenten Strahlerzeugungseinheit, deren Strahlung in einer Messsonde der Messeinrichtung in einen durch einen Messreferenzzweig geführten und darin reflektierten Referenzmessstrahl und in einen durch einen Messzweig geführten und an der rauen Oberfläche reflektierten Messstrahl aufgeteilt wird, mit einer Einrichtung zur Modulation der Licht-Phase oder zum Verschieben der Licht-Frequenz entsprechend einer Heterodynfrequenz eines ersten Teilstrahls gegenüber der Licht-Phase oder der Licht-Frequenz eines zweiten Teilstrahls mit einer Überlagerungseinheit zum Überlagern des reflektierten Messreferenzstrahls mit dem reflektierten Messstrahl mit einer Strahlzerlegungs- und Strahlempfangseinheit zum Aufspalten der überlagerten Strahlung auf zumindest zwei Strahlen mit unterschiedlichen Wellenlängen und Umwandeln der Strahlung in elektrische Signale und mit einer Auswerteeinrichtung, in der die Form bzw. der Abstand der rauen Oberfläche auf der Grundlage einer Phasendifferenz der elektrischen Signale bestimmbar ist. Dabei ist es vorgesehen, dass die von der Strahlerzeugungseinheit abgegebene Strahlung zeitlich kurzkohärent und breitbandig ist, dass die Strahlerzeugungseinheit, ein Strahlteiler zum Bilden des ersten und zweiten Teilstrahls und die Einrichtung zur Phasenmodulation oder Frequenzverschiebung in einer von der Messsonde räumlich beabstandeten, als Modulationsinterferometer ausgebildeten Baueinheit angeordnet sind und dass in der Baueinheit in dem Strahlengang eines Teilstrahls ein Verzögerungselement angeordnet ist, das eine Differenz der optischen Weglängen der beiden Teilstrahlen ergibt, die länger als die Kohärenzlänge der von der Strahlerzeugungseinheit abgegebenen Strahlung ist.

Solche zunächst aus zwei Interferometern bestehenden interferometrischen Messeinrichtungen können mit unterschiedlichen Interferometertypen aufgebaut sein. So kann das Modulationsinterferometer als Mach-Zehnder Interferometer aufgebaut sein, während das Messinterferometer beziehungsweise die Messsonde kompakt, beispielsweise als Mirau-Interferometer, aufgebaut ist. Gemeinsam ist den interferometrischen Messeinrichtungen, dass ein in dem ersten Interferometer eingeschriebener Gangunterschied zwischen zwei Teilstrahlen von einer kurzkohärenten Strahlungsquelle in dem zweiten Messinterferometer beziehungsweise der Messsonde wieder ausgeglichen wird und so die Teilstrahlen zur Interferenzbildung gebracht werden. Der in der EP 1 058 812 B1 durch ein Verzögerungselement eingeschriebene Gangunterschied kann dabei auch durch unterschiedlich lange Teilarme, welche von den Teilstrahlen durchlaufen werden, erzeugt werden, wie es in der EP 1 058 812 B1 in einem mit Lichtleitern aufgebauten Modulationsinterferometer dargestellt ist.

Der in dem Modulationsinterferometer einzuschreibende Gangunterschied richtet sich nach der konstruktiven Ausführung des Messinterferometers beziehungsweise der Messsonde.

Die Schrift EP 1 082 580 B1 beschreibt eine interferometrische Messeinrichtung zum Erfassen der Form, der Rauhigkeit oder des Abstandes von Oberflächen mit einem Modulationsinterferometer, das eine räumlich kohärente Strahlungsquelle und einen ersten Strahlteiler zum Aufteilen von deren Strahlung in zwei Teilstrahlen aufweist, von denen der eine gegenüber dem anderen mittels einer Modulationseinrichtung in seiner Licht-Phase oder Licht-Frequenz verschoben ist und die anschließend vereinigt sind, mit einer Messsonde, in der die vereinigten Teilstrahlen in einen durch einen Messzweig geführten und an der Oberfläche reflektierten Messstrahl sowie einen durch einen Referenzzweig geführten und darin reflektierten Referenzstrahl aufgeteilt werden und in der der reflektierte Messstrahl mit dem reflektierten Referenzstrahl überlagert ist, und mit einer Empfängereinheit zum Aufspalten der überlagerten Strahlung mit unterschiedlichen Wellenlängen und Umwandeln der Strahlung in elektrische Signale und zum Auswerten der Signale auf der Grundlage einer Phasendifferenz. Dabei ist es vorgesehen, dass das als Baueinheit aufgebaute Modulationsinterferometer von der Messsonde räumlich getrennt und über eine Lichtleitfaseranordnung mit dieser koppelbar ist und dass der Messzweig und der Referenzzweig durch einen oder mehrere den Messstrahl und den Referenzstrahl leitende Festkörper gebildet sind.

In der Schrift DE 197 21 843 C1 ist eine interferometrische Messvorrichtung zur Formvermessung an rauen Oberflächen eines Messobjekts mit einer Strahlungserzeugungseinheit zur Abgabe einer kurzkohärenten Strahlung, einem ersten Strahlteiler zum Bilden eines ersten und eines zweiten Teilstrahls, von denen der erste auf die zu vermessende Oberfläche und der zweite auf eine Vorrichtung mit einem reflektierenden Element zum periodischen Ändern des Lichtwegs gerichtet ist, mit einem Überlagerungselement, an dem die von der Oberfläche und der Vorrichtung kommende Strahlung zur Interferenz gebracht werden, und einer Photodetektoreinrichtung, die die interferierte Strahlung aufnimmt und entsprechende elektrische Signale einer Steuereinrichtung zur Auswertung zuführt. Dabei ist es vorgesehen, dass der erste Teilstrahl mittels mindestens eines weiteren Strahlteilers in mindestens zwei weitere Teilstrahlen aufgeteilt wird, dass der eine weitere Teilstrahl als Referenz-Teilstrahl auf einen in vorgegebenem Abstand von dem weiteren Strahlteiler angeordneten Referenzspiegel geführt ist, während der mindestens eine andere weitere Teilstrahl als Mess-Teilstrahl auf einen jeweiligen Messpunkt (MP1, MP2) des Messobjekts gelenkt ist und dass die Interferenzmaxima (E_{R}, E₁, E₂) des Referenz-Teilstrahls und des mindestens einen Mess-Teilstrahls mittels der Photodetektoreinrichtung und der Steuereinrichtung getrennt erfassbar sind. Vorteilhaft wird dabei ein zusätzlicher zweiter Mess-Teilstrahl ausgekoppelt. Durch Vergleich der Interferenzbildung des ersten Mess-Teilstrahls und des Referenz-Teilstrahls mit dem von der Vorrichtung kommenden zweiten Teilstrahl kann ein Referenzpunkt für den ersten Messpunkt auf der Oberfläche des Messobjekts gewonnen werden. Durch Variation der optischen Weglänge in dem Modulationsinterferometer kann der Tastpunkt des zweiten Mess-Teilstrahls auf den zweiten Messpunkt der Oberfläche des Messobjekts verschoben werden. Aus der Variation der optischen Weglänge kann so auf den Abstand zwischen den beiden Messpunkten, beispielsweise den Durchmesser einer Bohrung, geschlossen werden. Nachteilig hierbei ist, dass der Messbereich auf die Einstellmöglichkeit der optischen Weglänge in dem Modulationsinterferometer beschränkt ist und dass eine aufwändige Strahlführung zur Bereitstellung des Referenz-Teilstrahls erforderlich ist.

Neben den beschriebenen Modulationsinterferometern sind weitere optische, punktmessende Tastsystem und Messverfahren zur Bestimmung von Oberflächenkonturen und Rauhigkeiten bekannt, beispielsweise Autofokus-Sensoren, Triangulation, chromatische Sensoren und Weisslicht-Interferometer.

Es ist Aufgabe der Erfindung, eine einfach aufzubauende optische Messsonde zur Messung von Durchmessern an Objekten bereitzustellen.

Es ist weiterhin Aufgabe der Erfindung, ein Verfahren zum Betrieb einer solchen optischen Messsonde bereitzustellen.

### Offenbarung der Erfindung

Die Erfindung betrifft ein Verfahren gemäß Anspruch 1 und eine Vorrichtung gemäß Anspruch 4.

Die die optische Messsonde betreffende Aufgabe der Erfindung wird dadurch gelöst, dass in der optischen Messsonde ein zweites optisches Element zur Aufteilung des optischen Strahls in einen ersten Messstrahl und einen zweiten Messstrahl derart vorgesehen ist, dass der zweite Messstrahl entgegengesetzt zur Richtung des ersten Messstrahls aus der Messsonde geführt ist und dass der erste Messstrahl einen ersten Tastpunkt und der zweite Messstrahl einen zweiten Tastpunkt ausbildet.

Die optische Messsonde kann so positioniert werden, dass in einer ersten Messposition der erste Tastpunkt des ersten Messstrahls auf einem ersten Messpunkt der Oberfläche liegt. In einer zweiten Messposition liegt der zweite Tastpunkt des zweiten Messstrahls auf einem zweiten Messpunkt der Oberfläche. Die Tastpunkte sind dabei Positionen, in denen die Lage Oberfläche, beispielsweise interferometrisch, nachgewiesen werden kann. Da die beiden Messstrahlen in entgegengesetzte Richtungen verlaufen, kann aus dem parallel zu der Ausbreitungsrichtung der Messstrahlen verlaufenden Abstand zwischen der ersten Messposition und der zweiten Messposition bei bekanntem Abstand der beiden Tastpunkte der Abstand der beiden Messpunkte auf der Oberfläche bestimmt werden.

Der Abstand der Messpositionen kann beispielsweise über den gemessenen Verfahrweg eines Tastarms einer Koordinaten-Messmaschine oder einer Formmessmaschine beziehungsweise die Ansteuerung des Stellelements des Tastarms bestimmt werden, wobei die optische Messsonde einen Teil des Tastarms darstellt. Der messbare Abstand der Messpunkte selbst ist lediglich durch den Verstellweg des Tastarms beschränkt. Die Anordnung ermöglicht die Messung eines Innendurchmessers einer Bohrung sowie die Messung eines Außendurchmessers eines Messobjektes. Durch die Ausrichtung der beiden Messstrahlen ist dazu keine Drehung der Messsonde notwendig, wodurch eine hohe Genauigkeit bei günstigem Aufbau ermöglicht wird.

Eine einfache Bestimmung des Durchmessers eines Objekts, beispielsweise einer Bohrung in einem Werkstück, wird dadurch ermöglicht, dass der erste Messstrahl und der zweite Messstrahl senkrecht zu einer mechanischen Achse eines die Messsonde enthaltenden Tastarms geführt sind. Der Abstand der Messpositionen ergibt sich dann aus der lateralen Bewegung des Tastarms entlang der Ausbreitungsrichtung der beiden Messstrahlen.

Der Abstand zweier exakt gegenüberliegender Messpunkte auf der Oberfläche des Messobjekts können dadurch einfach gemessen werden, dass der erste Messstrahl und der zweite Messstrahl auf einer gemeinsamen Geraden in entgegengesetzten Richtungen geführt sind.

Die Aufteilung des ersten Teilstrahls in den ersten und den zweiten Messstrahl kann dadurch erfolgen, dass das zweite optische Element als Prismenpaar ausgeführt ist oder dass das zweite optische Element aus einem Strahlteiler und einem nachfolgenden Spiegel aufgebaut ist. Die Richtung der Ausbreitung des ersten Messstrahls und des zweiten Messstrahls wird durch die Ausrichtung der reflektierenden Oberflächen der Prismen oder des Strahlteilers und des Spiegels vorgegeben. Dabei ermöglicht die Anordnung mit den Prismen, dass der erste Messstrahl und der zweite Messstrahl auf einer gemeinsamen Geraden in entgegengesetzten Richtungen geführt sind.

Ein kompakter Aufbau bei gleichzeitig frei positionierbarer Messsonde ergibt sich dadurch, dass die optische Messsonde über einem Lichtleiter mit einer Auswerteeinheit gekoppelt ist. Die Messsonde und die Auswerteeinheit bilden ein beispielsweise interferometrische arbeitendes optisches Messsystem.

Eine einfache getrennte optische Auswertung des ersten Messstrahls und des zweiten Messstrahls in der Auswerteeinheit kann dadurch erreicht werden, dass das zweite optische Element als polarisierendes optisches Element ausgeführt ist und dass der erste Messstrahl und der zweite Messstrahl unterschiedlich polarisiert sind. Zur Auswertung erfolgt eine entsprechende Trennung der verschiedenen Polarisationsebenen.

Ist es vorgesehen, dass in der Auswerteeinheit ein Abstand zwischen dem ersten Tastpunkt des ersten Messstrahls und dem zweiten Tastpunkt des zweiten Messstrahls gespeichert ist und/oder dass die Auswerteeinheit zur Ansteuerung eines Stellelements zur Bewegung des Tastarms ausgelegt ist und/oder dass die Auswerteeinheit mit einem Messmittel zur Bestimmung des Abstands zwischen der ersten Messposition und der zweiten Messposition verbunden ist, so liegen in der Auswerteeinheit mit dem Abstand zwischen den Messpositionen und dem Abstand zwischen den Tastpunkten alle notwendigen Informationen zur Bestimmung des Abstandes zwischen den beiden Oberflächen vor. Der Abstand zwischen den Messpositionen kann dabei alternativ aus der Ansteuerung des Stellelements oder aus einer Messung des Verfahrwegs des Tastarms bestimmt werden.

Die das Verfahren betreffende Aufgabe der Erfindung wird dadurch gelöst, dass der optische Strahl in der optischen Messsonde in einen ersten Messstrahl mit einem ersten Tastpunkt und in zweiten Messstrahl mit einem diametral gegenüber dem ersten Tastpunkt liegenden zweiten Tastpunkt aufgeteilt wird, dass in einem ersten Schritt die optische Messsonde auf eine erste Messposition derart positioniert wird, dass der erste Tastpunkt auf einer ersten Oberfläche des Objekts liegt, dass in einem zweiten Schritt der Tastarm auf eine zweite Messposition derart positioniert wird, dass der zweite Tastpunkt auf einer zweiten Oberfläche des Objekts liegt und dass der Abstand der Oberflächen aus dem Abstand zwischen der ersten Messposition und der zweiten Messposition und einem Kalibrierabstand zwischen dem ersten Tastpunkt und dem zweiten Tastpunkt bestimmt wird. Die Tastpunkte sind dabei Positionen, in denen die Lage Oberfläche optisch nachgewiesen werden kann. Die erste Messposition dient als Bezugspunkt. Von dieser ausgehend wird der Tastarm so lange in die Richtung der zweiten Oberfläche bewegt, bis der zweite Tastpunkt auf der zweiten Oberfläche liegt. Aus dem Verfahrweg der Messsonde und somit des Tastarms sowie aus dem gerätespezifischen Kalibrierabstand zwischen den beiden Tastpunkten kann jetzt auf den Abstand zwischen den beiden Oberflächen geschlossen werden. Das Verfahren ermöglicht die genaue Messung des Innendurchmessers oder des Außendurchmessers von Messobjekten. Der maximal messbare Durchmesser ist dabei lediglich von dem maximalen Verfahrweg des Tastarms abhängig.

Ist es vorgesehen, dass der erste Messstrahl und der zweite Messstrahl senkrecht zu einer mechanischen Achse des Tastarms auf die Oberfläche geführt werden, so lässt sich der Verfahrweg beim Anfahren der zweiten Messposition genau bestimmen.

Zur Bestimmung des Abstandes zwischen den beiden Oberflächen ist die genaue Kenntnis des Kalibrierabstands als Distanz zwischen den beiden Tastpunkten notwendig. Zur genauen Bestimmung des Kalibrierabstandes kann es vorgesehen sein, dass der Kalibrierabstand zwischen dem ersten Tastpunkt und dem zweiten Tastpunkt in einem Kalibierschritt an einem Kalibrierobjekt mit bekannter Form bestimmt wird und dass der Kalibrierabstand in einer Auswerteeinheit hinterlegt wird. Bei dem Kalibrierschritt wird zunächst der erste Tastpunkt auf eine erste Oberfläche und anschließend der zweite Tastpunkt auf eine zweite Oberfläche des Kalibrierobjektes eingestellt. Aus dem dazu notwendigen Verfahrweg kann bei bekanntem Abstand der beiden Oberflächen des Kalibrierobjekts der Kalibrierabstand zwischen den beiden Tastpunkten bestimmt und für folgende Messungen in der Auswerteeinheit gespeichert werden.

### Kurze Beschreibung der Zeichnungen

Die Erfindung wird im Folgenden anhand eines in den Figuren dargestellten Ausführungsbeispiels näher erläutert. Es zeigen:
Figur 1 in einer schematischen Darstellung eine optische Messsonde,
Figur 2 ein optisches Element.

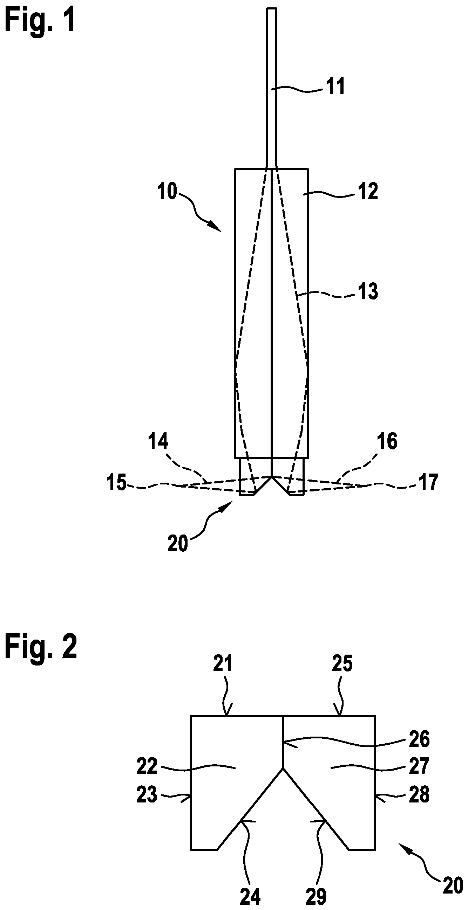

Figur 1 zeigt in einer schematischen Darstellung eine optische Messsonde 10. Die optische Messsonde 10 ist in dem gezeigten Ausführungsbeispiel Teil einer optischen Messeinrichtung zur Erfassung des Innen- oder Außendurchmessers eines Objektes. Die optische Messsonde 10 ist über einen Lichtleiter 11 mit einer nicht dargestellten Auswerteeinheit der optischen Messeinrichtung gekoppelt. Ein von der Auswerteeinheit über den Lichtleiter 11 an die optische Messsonde 10 geleiteter optischer Strahl 13 wird über ein als Gradienten-Index-Linse (GRIN-Linse) ausgeführtes erstes optisches Element 12 fokussiert und von einem zweiten optischen Element 20 in Form eines Prismenpaares in einen ersten Messstrahl 14 mit einem ersten Tastpunkt 15 und in einen zweiten Messstrahl 16 mit einem zweiten Tastpunkt 17 aufgeteilt. Das erste optische Element 12 fokussiert den ersten Teilstrahl 13 in den beiden Tastpunkten 15, 17.

Die optische Messsonde 10 und der Lichtleiter 11 sind Teil eines Tastarms einer nicht dargestellten Formmessmaschine. Die optische Messsonde 10 kann so räumlich gegenüber einer zu messenden Oberfläche positioniert werden.

Der erste Messstrahl 14 und der zweite Messstrahl 16 sind durch das zweite optische Element 20 derart abgelenkt, dass sie senkrecht zu einer mechanischen Achse der optischen Messsonde 10 und somit des Tastarms der Formmessmaschine aus der optischen Messsonde 10 austreten. Dabei sind die Messstrahlen 14, 16 so ausgerichtet, dass sie entlang einer Geraden in entgegengesetzte Richtungen laufen.

Die optische Messeinrichtung ist so ausgelegt, dass sie eine Oberfläche nachweist, wenn sie sich im Fokus eines Messstrahls 14, 16, also in einem der Tastpunkte 13, 15, befindet. Dies kann beispielsweise interferometrisch erfolgen.

Zur Bestimmung eines Durchmessers eines Messobjektes, beispielsweise der Messung eines Innendurchmessers einer Bohrung, wird die optische Messeinrichtung zunächst an einem Kalibrierobjekt mit bekanntem Abstand zwischen zwei gegenüberliegenden Oberflächen eingemessen. Dabei wird der Abstand zwischen den Tastpunkten 15, 17 ermittelt und als Kalibrierabstand in der Auswerteeinheit gespeichert.

Zur Bestimmung des Durchmessers der Bohrung wird die optische Messsonde 10 in der Bohrung so positioniert, dass der erste Tastpunkt 15 auf der inneren Oberfläche der Bohrung liegt. Diese erste Messposition wird im Koordinatensystem der Formmessmaschine gespeichert. Anschließend wird der Tastarm und damit die optische Messsonde 10 entlang der Geraden, auf denen die Messstrahlen 14,16 liegen, derart verschoben, bis der zweite Tastpunkt 17 auf der gegenüberliegenden Oberfläche der Bohrung liegt. Auch diese zweite Messposition wird gespeichert. Aus den beiden Messpositionen und dem Kalibrierabstand kann jetzt der Durchmesser der Bohrung bestimmt werden.

Figur 2 zeigt das bereits in Figur 1 eingeführte zweite optische Element 20 in Form eines Prismenpaares. Ein erstes Prisma 22 und ein zweites Prisma 27 sind gegeneinander durch eine Kontaktfläche 26 ausgerichtet. An dem ersten Prisma 22 sind eine erste Strahleintrittsfläche 21, eine erste Strahlaustrittsfläche 23 und eine erste Reflektionsfläche 24 vorgesehen. Entsprechend enthält das zweite Prisma 27 eine zweite Strahleintrittsfläche 25, eine zweite Strahlaustrittsfläche 28 und eine zweite Reflektionsfläche 29.

Der in Figur 1 gezeigte fokussierte optische Strahl 13 tritt durch die Strahleintrittsflächen 21, 25 in die Prismen 22, 27 ein. Ein Teil des optischen Strahls 13 wird an der ersten Reflektionsfläche 24 reflektiert und verlässt das erste Prisma 22 als erster Messstrahl 14 durch die erste Strahlaustrittsfläche 23. Ein weiterer Teil des optischen Strahls 13 wird an der zweiten Reflektionsfläche 29 reflektiert und verlässt das zweite Prisma 27 als zweiter Messstrahl 16 durch die zweite Strahlaustrittsfläche 28. Durch die Anordnung der Prismen 22, 27 und der Reflektionsflächen 24, 29 wird erreicht, dass die Messstrahlen 14, 16 die optische Messsonde 10 in entgegengesetzter Richtung senkrecht zu einer mechanischen Achse der optischen Messsonde 10 verlassen. Dadurch bilden sich zwei diametral angeordnete Tastpunkte 15, 17 aus, die auf einer Geraden liegen und die senkrecht zu der mechanischen Achse der optischen Messsonde 10 und somit des Tastarms orientiert sind. Die von einer Oberfläche des Messobjekts zurückreflektierten Messstrahlen 14, 16 werden über die jeweiligen Strahlaustrittsflächen 23, 28, die jeweiligen Reflektionsflächen 24, 29 und die jeweiligen Strahleintrittsflächen 21, 25 zurück zu dem in Figur 1 gezeigten ersten optischen Element 12 und dem Lichtleiter 11 geleitet.

## Patentansprüche

1. Verfahren zur optischen Messung von Innen- und/oder Außendurchmessern von Objekten mit einer Messmaschine mit einem Tastarm mit einer optischen Messsonde (10), wobei ein optischer Strahl von der optischen Messsonde (10) auf eine Oberfläche des Objektes fokussiert wird,
- wobei der optische Strahl in der optischen Messsonde (10) in einen ersten Messstrahl (14) mit einem ersten Tastpunkt (15) und in einen zweiten Messstrahl (16) mit einem diametral gegenüber dem ersten Tastpunkt (15) liegenden zweiten Tastpunkt (17) aufgeteilt wird,
- wobei in einem ersten Schritt die optische Messsonde (10) auf eine erste Messposition derart positioniert wird, dass der erste Tastpunkt (15) auf einer ersten Oberfläche des Objekts liegt,
- wobei in einem zweiten Schritt der Tastarm auf eine zweite Messposition derart positioniert wird, dass der zweite Tastpunkt (17) auf einer zweiten Oberfläche des Objekts liegt und
- wobei der Abstand der Oberflächen aus dem Abstand zwischen der ersten Messposition und der zweiten Messposition und einem Kalibrierabstand zwischen dem ersten Tastpunkt (15) und dem zweiten Tastpunkt (17) bestimmt wird.

2. Verfahren nach Anspruch 1,
**dadurch gekennzeichnet,**
**dass** der erste Messstrahl (14) und der zweite Messstrahl (16) senkrecht zu einer mechanischen Achse des Tastarms auf die Oberflächen geführt werden.

3. Verfahren nach Anspruch 1 oder 2,
**dadurch gekennzeichnet,**
**dass** der Kalibrierabstand zwischen dem ersten Tastpunkt (15) und dem zweiten Tastpunkt (17) in einem Kalibrierschritt an einem Kalibrierobjekt mit bekannter Form bestimmt wird und
**dass** der Kalibrierabstand in einer Auswerteeinheit hinterlegt wird.

4. Vorrichtung zur Durchführung des Verfahrens nach Anspruch 1 mit einer Messmaschine mit einem Tastarm mit einer optischen Messsonde (10) zur Messung von Innen- und/oder Außendurchmessern von Objekten, mit einem ersten optischen Element zum Fokussieren oder Kollimieren eines optischen Strahls auf eine Oberfläche des Objektes,
- wobei in der optischen Messsonde (10) ein zweites optisches Element (20) zur Aufteilung des optischen Strahls (13) in einen ersten Messstrahl (14) und einen zweiten Messstrahl (16) derart vorhanden ist, dass der zweite Messstrahl (16) entgegengesetzt zur Richtung des ersten Messstrahls (14) aus der Messsonde (10) geführt ist,
- so dass der erste Messstrahl (14) einen ersten Tastpunkt (15) und der zweite Messstrahl (16) einen zweiten Tastpunkt (17) ausbildet,
- wobei in einem ersten Schritt die optische Messsonde (10) auf eine erste Messposition derart positionierbar ist, dass der erste Tastpunkt (15) auf einer ersten Oberfläche des Objekts liegt,
- wobei in einem zweiten Schritt der Tastarm auf eine zweite Messposition derart positionierbar ist, dass der zweite Tastpunkt (17) auf einer zweiten Oberfläche des Objekts liegt und
- die Vorrichtung derart ausgebildet ist, dass der Abstand der Oberflächen aus dem Abstand zwischen der ersten Messposition und der zweiten Messposition und einem Kalibrierabstand zwischen dem ersten Tastpunkt (15) und dem zweiten Tastpunkt (17) bestimmbar ist.

5. Optische Messsonde nach Anspruch 4,
**dadurch gekennzeichnet,**
**dass** der erste Messstrahl (14) und der zweite Messstrahl(16) senkrecht zu einer mechanischen Achse eines die Messsonde enthaltenden Tastarms geführt sind.

6. Optische Messsonde nach Anspruch 4 oder 5,
**dadurch gekennzeichnet,**
**dass** der erste Messstrahl (14) und der zweite Messstrahl (16) auf einer gemeinsamen Geraden in entgegengesetzten Richtungen geführt sind.

7. Optische Messsonde nach einem der Ansprüche 4 bis 6,
**dadurch gekennzeichnet,**
**dass** das zweite optische Element (20) als Prismenpaar ausgeführt ist oder dass das zweite optische Element (20) aus einem Strahlteiler und einem nachfolgenden Spiegel aufgebaut ist.

8. Optische Messsonde nach einem der Ansprüche 4 bis 7,
**dadurch gekennzeichnet,**
**dass** die optische Messsonde (10) über einen Lichtleiter (11) mit einer Auswerteeinheit gekoppelt ist.

9. Optische Messsonde nach einem der Ansprüche 4 bis 8,
**dadurch gekennzeichnet,**
**dass** das zweite optische Element (20) als polarisierendes optisches Element ausgeführt ist und
**dass** der erste Messstrahl (14) und der zweite Messstrahl (16) unterschiedlich polarisiert sind.

10. Optische Messsonde nach einem der Ansprüche 4 bis 9,
**dadurch gekennzeichnet,**
**dass** in der Auswerteeinheit ein Abstand zwischen dem ersten Tastpunkt (15) des ersten Messstrahls (14) und dem zweiten Tastpunkt (17) des zweiten Messstrahls (16) gespeichert ist und/oder dass die Auswerteeinheit zur Ansteuerung eines Stellellements zur Bewegung des Tastarms ausgelegt ist und/oder dass die Auswerteeinheit mit einem Messmittel zur Bestimmung des Abstands zwischen der ersten Messposition und der zweiten Messposition verbunden ist.

## Claims

1. Method for optically measuring inner and/or outer diameters of objects using a measuring machine having a probe arm having an optical measuring probe (10), wherein an optical beam is focused by the optical measuring probe (10) onto a surface of the object,
- wherein the optical beam is split in the optical measuring probe (10) into a first measuring beam (14) having a first probe point (15) and into a second measuring beam (16) having a second probe point (17), located diametrically opposite to the first probe point (15),
- wherein, in a first step, the optical measuring probe (10) is positioned at a first measurement position such that the first probe point (15) is situated on a first surface of the object,
- wherein, in a second step, the probe arm is positioned at a second measurement position such that the second probe point (17) is situated on a second surface of the object, and
- wherein the distance between the surfaces is determined from the distance between the first measurement position and the second measurement position and a calibration distance between the first probe point (15) and the second probe point (17).

2. Method according to Claim 1, **characterized in that** the first measuring beam (14) and the second measuring beam (16) are guided to the surfaces perpendicularly with respect to a mechanical axis of the probe arm.

3. Method according to Claim 1 or 2, **characterized in that** the calibration distance between the first probe point (15) and the second probe point (17) is determined in a calibration step on a calibration object of a known shape, and **in that** the calibration distance is stored in an evaluation unit.

4. Apparatus for performing the method according to Claim 1, having a measuring machine having a probe arm having an optical measuring probe (10) for measuring inner and/or outer diameters of objects, having a first optical element for focusing or collimating an optical beam onto a surface of the object,
- wherein a second optical element (20) for splitting the optical beam (13) into a first measuring beam (14) and a second measuring beam (16) is provided in the optical measuring probe (10) in a manner such that the second measuring beam (16) is guided out of the measuring probe (10) in the opposite direction to the first measuring beam (14),
- such that the first measuring beam (14) forms a first probe point (15) and the second measuring beam (16) forms a second probe point (17),
- wherein, in a first step, the optical measuring probe (10) is positionable at a first measurement position such that the first probe point (15) is situated on a first surface of the object,
- wherein, in a second step, the probe arm is positionable at a second measurement position such that the second probe point (17) is situated on a second surface of the object, and
- the apparatus is configured such that the distance between the surfaces can be determined from the distance between the first measurement position and the second measurement position and a calibration distance between the first probe point (15) and the second probe point (17) .

5. Optical measuring probe according to Claim 4, **characterized in that** the first measuring beam (14) and the second measuring beam (16) are guided perpendicularly with respect to a mechanical axis of a probe arm that includes the measuring probe.

6. Optical measuring probe according to Claim 4 or 5, **characterized in that** the first measuring beam (14) and the second measuring beam (16) are guided on a common straight line in opposite directions.

7. Optical measuring probe according to one of Claims 4 to 6, **characterized in that** the second optical element (20) is embodied in the form of a prism pair or **in that** the second optical element (20) is made up of a beam splitter and a subsequent mirror.

8. Optical measuring probe according to one of Claims 4 to 7, **characterized in that** the optical measuring probe (10) is coupled to an evaluation unit via an optical waveguide (11).

9. Optical measuring probe according to one of Claims 4 to 8, **characterized in that** the second optical element (20) is embodied in the form of a polarizing optical element and **in that** the first measuring beam (14) and the second measuring beam (16) have different polarizations.

10. Optical measuring probe according to one of Claims 4 to 9, **characterized in that** a distance between the first probe point (15) of the first measuring beam (14) and the second probe point (17) of the second measuring beam (16) is stored in the evaluation unit and/or **in that** the evaluation unit is configured for actuating an actuating element for moving the probe arm and/or **in that** the evaluation unit is connected to a measuring means for determining the distance between the first measurement position and the second measurement position.

## Revendications

1. Procédé de mesure optique de diamètres intérieurs et/ou extérieurs d'objets avec une machine de mesure comprenant un bras de palpage muni d'une sonde de mesure optique (10),
un rayon optique de la sonde de mesure optique (10) étant concentré sur une surface de l'objet,
- le rayon optique dans la sonde de mesure optique (10) étant divisé en un premier rayon de mesure (14) ayant un premier point de palpage (15) et un deuxième rayon de mesure (16) ayant un deuxième point de palpage (17) qui est situé diamétralement opposé au premier point de palpage (15),
- dans une première étape, la sonde de mesure optique (10) étant positionnée sur une première position de mesure de telle sorte que le premier point de palpage (15) se trouve sur une première surface de l'objet,
- dans une deuxième étape, le bras de palpage étant positionné sur une deuxième position de mesure de telle sorte que le deuxième point de palpage (17) se trouve sur une deuxième surface de l'objet et
- l'écart entre les surfaces étant déterminé à partir de l'écart entre la première position de mesure et la deuxième position de mesure et un écart d'étalonnage entre le premier point de palpage (15) et le deuxième point de palpage (17).

2. Procédé selon la revendication 1, **caractérisé en ce que** le premier rayon de mesure (14) et le deuxième rayon de mesure (16) sont guidés sur les surfaces perpendiculairement à un axe mécanique du bras de palpage.

3. Procédé selon la revendication 1 ou 2, **caractérisé en ce que** l'écart d'étalonnage entre le premier point de palpage (15) et le deuxième point de palpage (17) est déterminé dans une étape d'étalonnage sur un objet d'étalonnage ayant une forme connue et **en ce que** l'écart d'étalonnage est stocké dans une unité d'interprétation.

4. Dispositif pour mettre en oeuvre le procédé selon la revendication 1 avec une machine de mesure comprenant un bras de palpage muni d'une sonde de mesure optique (10) servant à la mesure de diamètres intérieurs et/ou extérieurs d'objets, comprenant un premier élément optique destiné à concentrer ou à collimater un rayon optique sur une surface de l'objet,
- un deuxième élément optique (20) se trouvant dans la sonde de mesure optique (10) pour diviser le rayon optique (13) en un premier rayon de mesure (14) et un deuxième rayon de mesure (16) de telle sorte que le deuxième rayon de mesure (16) est guidé hors de la sonde de mesure (10) à l'opposé de la direction du premier rayon de mesure (14),
- de telle sorte que le premier rayon de mesure (14) forme un premier point de palpage (15) et le deuxième rayon de mesure (16) forme un deuxième point de palpage (17),
- dans une première étape, la sonde de mesure optique (10) pouvant être positionnée sur une première position de mesure de telle sorte que le premier point de palpage (15) se trouve sur une deuxième surface de l'objet,
- dans une deuxième étape, le bras de palpage pouvant être positionné sur une deuxième position de mesure de telle sorte que le deuxième point de palpage (17) se trouve sur une première surface de l'objet et
- le dispositif est configuré de telle sorte que l'écart entre les surfaces peut être déterminé à partir de l'écart entre la première position de mesure et la deuxième position de mesure et un écart d'étalonnage entre le premier point de palpage (15) et le deuxième point de palpage (17).

5. Sonde de mesure optique selon la revendication 4, **caractérisée en ce que** le premier rayon de mesure (14) et le deuxième rayon de mesure (16) sont guidés perpendiculairement à un axe mécanique d'un bras de palpage qui contient la sonde de mesure.

6. Sonde de mesure optique selon la revendication 4 ou 5, **caractérisée en ce que** le premier rayon de mesure (14) et le deuxième rayon de mesure (16) sont guidés sur une droite commune dans des directions opposées.

7. Sonde de mesure optique selon l'une des revendications 4 à 6, **caractérisée en ce que** le deuxième élément optique (20) est réalisé sous la forme d'une paire de prismes ou **en ce que** le deuxième élément optique (20) est constitué d'un diviseur de rayon et d'un miroir qui suit.

8. Sonde de mesure optique selon l'une des revendications 4 à 7, **caractérisée en ce que** la sonde de mesure optique (10) est couplée à une unité d'interprétation par le biais d'une fibre optique (11).

9. Sonde de mesure optique selon l'une des revendications 4 à 8, **caractérisée en ce que** le deuxième élément optique (20) est réalisé sous la forme d'un élément optique polarisant et **en ce que** le premier rayon de mesure (14) et le deuxième rayon de mesure (16) sont de polarisations différentes.

10. Sonde de mesure optique selon l'une des revendications 4 à 9, **caractérisée en ce qu'**un écart entre le premier point de palpage (15) du premier rayon de mesure (14) et le deuxième point de palpage (17) du deuxième rayon de mesure (16) est enregistré dans l'unité d'interprétation et/ou **en ce que** l'unité d'interprétation est conçue pour commander un élément actionneur servant au mouvement du bras de palpage et/ou **en ce que** l'unité d'interprétation est reliée à un moyen de mesure servant à déterminer l'écart entre la première position de mesure et la deuxième position de mesure.
